# EUROPÄISCHE PATENTSCHRIFT

(11) **EP 3 384 572 B1**
(45) Veröffentlichungstag und Bekanntmachung des Hinweises auf die Patenterteilung: **16.10.2019**
(21) Anmeldenummer: 16806009.3
(22) Anmeldetag: 28.11.2016
(51) Int. Cl.: H02G 3/22

(54) **VERFAHREN UND SYSTEM FÜR EINE GASDICHTE KABELDURCHFÜHRUNG**
METHOD AND SYSTEM FOR A GAS TIGHT CABLE FEEDTHROUGH
PROCEDE ET SYSTEM POUR UNE TRAVERSÉE DE CÂBLES ÉTANCHE AU GAZ

(30) Priorität: 01.12.2015 DE 102015223910
(43) Veröffentlichungstag der Anmeldung: 10.10.2018
(73) Patentinhaber: Brose Fahrzeugteile GmbH & Co. Kommanditgesellschaft, Würzburg, 97076 Würzburg (DE)
(72) Erfinder: STEINSHORN, Axel, 97957 Wittighausen (DE); SCHRÖDER, Hans-Joachim, 65189 Wiesbaden (DE)
(74) Vertreter: Isarpatent
(86) Internationale Anmeldenummer: PCT/EP2016/078970
(87) Internationale Veröffentlichungsnummer: WO 2017/093171

(56) Entgegenhaltungen:
- DE-A1-102013 007 909
- DE-A1-102013 201 689
- DE-A1-102013 202 614

## Beschreibung

### GEBIET DER ERFINDUNG

Die vorliegende Erfindung betrifft ein System aus einem ersten Bauteil, beispielsweise einer Statorwicklung oder einer Elektronikbaugruppe, mit einem Leiter und einem Trennwandelement. Der Leiter wird dabei durch das Trennwandelement hindurchgeführt, um auf der anderen Seite mit einem zweiten Bauteil elektrischen Kontaktiert oder elektrisch verbunden zu werden. Des Weiteren betrifft die vorliegende Erfindung ein Verfahren zur Herstellung des Systems.

### TECHNISCHER HINTERGRUND

Bekannte Ausführungen nutzen Verfahren, bei denen zwischen dem durchzuführenden Kontakt und zu durchdringendem Konstruktionselement ein dichtendes Medium eingebracht wird, welches abhängig von Temperatur, Druck und verlangter mechanischer Festigkeit aus einem Polymer oder einem speziellen Glas besteht. Bei der Verwendung eines Polymers ist die Druckdichte bei hohen Drücken und die Durchlässigkeit für kleine Gasmoleküle ungünstig. Die direkte Einschmelzlösung mit Hilfe eines Glases ist wiederum aufwändig und mit den Fertigungseinrichtungen einer Elektronikfertigung nur schwer zu realisieren.

In der DE 10 2013 007909 ist ein System nach dem Oberbergriff des Anspruchs 1 bekannt.

In der DE 198 52 730 C3 ist eine Baugruppe aus einem Halteteil aus elektrisch isolierendem Material und aus einem darin eingegossenen elektrischen Kontaktstift bekannt, der einen gasdichten elektrischen Anschluss durch das Halteteil hindurch bereitstellt. Der Kontaktstift ist an seinen beiden axialen Enden mit jeweils einem Anschlussbereich versehen.

Der Anschlussbereich bildet die Schnittstelle zu einem an die Kontaktstifte anzuschließenden Bauteil. Der Kontaktstift ist zwischen den Anschlussbereichen mit einem Fixierungsbereich, der für eine Verankerung des Kontaktstiftes in dem Halteteil sorgt, und einem Vergussbereich versehen, an dem eine Vergussmasse anliegt, die am Halteteil in einem als Bohrung ausgebildeten Aufnahmebereich anliegt.

### ZUSAMMENFASSUNG DER ERFINDUNG

Vor diesem Hintergrund liegt der vorliegenden Erfindung die Aufgabe zugrunde, ein System mit einer verbesserten Durchführung eines Leiters eines Bauteils durch ein Trennwandelement bereitzustellen zur elektrischen Kontaktierung oder Verbindung mit einem Bauteil auf der anderen Seite des Trennwandelements.

Erfindungsgemäß wird diese Aufgabe durch ein System mit den Merkmalen des Patentanspruchs 1 und/oder durch ein Verfahren mit den Merkmalen des Patentanspruches 9 gelöst.

Demgemäß ist vorgesehen:
- Ein System aufweisend ein Trennwandelement und ein erstes Bauteil, welches auf einer ersten Seite des Trennwandelements angeordnet ist, wobei das erste Bauteil wenigstens einen Leiter und das Trennwandelement eine zugeordnete Durchführung aufweist zum Durchführen des Leiters und elektrisches Kontaktieren oder elektrisches Verbinden des Leiters auf einer der ersten Seite gegenüberliegenden zweiten Seite des Trennwandelements, wobei der Leiter mit der Durchführung eine formschlüssige Verbindung bildet und in die Durchführung des Trennwandelements eingepresst ist wobei der Leiter zumindest im Bereich der Durchführung des Trennwandelements mit einer Oxid- oder Eloxalschicht versehen ist.
- Verfahren zur Herstellung eines Systems nach einem der vorstehenden Ansprüche, mit den Schritten:
   Bereitstellen des Trennwandelements;
   Bereitstellen des ersten Bauteils mit dem wenigstens einen Leiter;
   Ausbilden des Trennwandelements mit der Durchführung zur Einführung und Durchführung des zugeordneten wenigstens einen Leiters, wobei die Durchführung als Presspassung ausgebildet ist;
   Schrumpfen des Durchmessers des Leiters zumindest des durch die Durchführung einzuführenden und durchzuführenden Abschnitts des Leiters durch Herunterkühlen des Leiters bis der Leiter in die Durchführung einführbar und hindurchführbar ist;
   Einführen und Durchführen des Leiters von einer ersten Seite in und durch die Durchführung des Trennwandelements zur Bereitstellung einer elektrischen Kontaktierung auf einer der ersten Seite gegenüberliegenden zweiten Seite des Trennwandelements.

Die der vorliegenden Erfindung zugrunde liegende Erkenntnis/Idee besteht darin, einen Leiter eines Bauteils mit einer Durchführung eines Trennwandelements dicht zu verbinden, wobei der Leiter dabei formschlüssig mit der Durchführung verbunden ist und mit dieser einer Presspassung bildet. Dazu wird die Durchführung untermaßig oder als Presspassung ausgebildet und der Leiter heruntergekühlt, bis der Durchmesser des Leiters ausreichend geschrumpft ist, um den Leiter in die Durchführung ein- und durchzuführen, so dass der Leiter auf der anderen Seite des Trennwandelements mit einem zweiten Bauteil elektrisch kontaktiert oder elektrisch verbunden werden kann.

Dies hat den Vorteil, dass eine kostengünstige und robuste Verbindung des Leiters mit dem Trennwandelement bereitgestellt und gleichzeitig eine dichte, insbesondere gasdichte Verbindung, erzielt werden kann.

Vorteilhafte Ausgestaltungen und Weiterbildungen ergeben sich aus den weiteren Unteransprüchen sowie aus der Beschreibung unter Bezugnahme auf die Figuren der Zeichnung.

In einer erfindungsgemäßen Ausführungsform ist die Durchführung eine Durchgangsbohrung, welche mit dem hindurchgeführten Leiter eine Presspassung bildet, wobei der Leiter zum Einführen und Hindurchführen in der Durchführung zuvor geeignet Herunterkühlt wurde, um eine ausreichende Schrumpfung seines Durchmessers zu erzielen. Auf diese Weise kann Leiter mit dem Trennwandelement und seiner Durchführung gefügt werden und mit dem Trennwandelement eine dichte, insbesondere gasdichte Verbindung bereitstellen.

In einer weiteren erfindungsgemäßen Ausführungsform ist der Leiter, z.B. ein Kupferleiter, zumindest im Bereich der Durchführung des Trennwandelements auf seiner Außenseite zusätzlich aluminisiert oder mit einer Aluminiumhülse oder Aluminiumröhrchen z.B. formschlüssig verbunden. Die Aluminiumhülse oder das Aluminiumröhrchen kann aus Aluminium oder einer Aluminiumlegierung bestehen, bzw. der Leiter ist mit einer Beschichtung aus Aluminium oder einer Aluminiumlegierung versehen, welche eloxiert werden kann. Die Aluminisierung des Leiters hat den Vorteil, dass der Leiter dort wo er nicht kontaktiert werden soll zusätzlich eloxiert wird und wo er kontaktiert werden soll nicht eloxiert wird.

Gemäß einer erfindungsgemäßen Ausführungsform ist der Leiter zumindest im Bereich der Durchführung des Trennwandelements mit einer Oxid- oder Eloxalschicht versehen. Die Oxid- oder Eloxalschicht ist auf der Außenseite des Leiters oder bei einem zuvor aluminsierten Leiter auf der Aluminisierung oder Beschichtung aus Aluminium oder einer Aluminiumlegierung aufgebracht. Im Falle einer formschlüssigen Verbindung eines Leiters mit einer Aluminiumhülse oder Aluminiumröhrchen, z.B. bei einem Leiter aus Kupfer, ist die Oxid- oder Eloxalschicht auf der Außenseite der Aluminiumhülse bzw. des Aluminiumröhrchens vorgesehen. Eine derartige Oxid- oder Eloxalschicht hat den Vorteil, dass sie einen guten Isolator bereitstellt, der sich durch mechanische Kratzfestigkeit und Beständigkeit auszeichnet.

In einer weiteren erfindungsgemäßen Ausführungsform ist der Leiter aus einem elektrisch leitenden Material oder elektrisch leitenden Materialkombination z.B. aus Kupfer, einer Kupferlegierung, Aluminium und/oder einer Aluminiumlegierung hergestellt. Kupfer und Aluminium sowie deren Legierungen haben den Vorteil, dass sie kostengünstig sind und eine gute elektrische Leitfähigkeit aufweisen.

Gemäß einer anderen erfindungsgemäßen Ausführungsform ist das Trennwandelement aus Metall, Kunststoff und/oder faserverstärktem Kunststoff. Beispielsweise kann das Trennwandelement aus Stahl, Aluminium oder einer Aluminiumlegierung hergestellt sein, ohne jedoch auf diese Beispiele beschränkt zu sein.

In einer erfindungsgemäßen Ausführungsform ist der wenigstens eine Leiter des ersten Bauteils dicht, insbesondere flüssigkeitsdicht und/oder gasdicht, in der Durchführung des Trennwandelements aufgenommen, d.h. formschlüssig aufgenommen und eingepresst.

In einer weiteren erfindungsgemäßen Ausführungsform ist der wenigstens eine Leiter auf der zweiten Seite des Trennwandelements mit einem zweiten Bauteil elektrisch kontaktierbar oder elektrisch verbindbar. Das erste Bauteil ist dabei eine elektrische Wicklung, z.B. eine Statorwicklung, und das zweite Bauteil eine Elektronikbaugruppe oder umgekehrt.

Gemäß einer anderen erfindungsgemäßen Ausführungsform erfolgt ein Angleichen der Temperatur des wenigstens einen Leiters an die jeweilige Betriebstemperatur des Trennwandelements. Dabei dehnt sich der Leiter in seinem Durchmesser aus, so dass er mit der Durchführung des Trennwandelements eine formschlüssige Verbindung und eine Presspassung bildet bei allen möglichen Betriebstemperaturen des Trennwandelements und vorzugsweise des mit dem Trennwandelement verbundenen oder gekoppelten ersten und zweiten Bauteils. Dies hat den Vorteil, dass eine dichte, insbesondere flüssigkeitsdichte und/oder gasdichte Verbindung, des Leiters und des Trennwandelements mit seiner Durchführung im Betrieb des Systems mit seinem Trennwandelement und seinem ersten Bauteil sichergestellt ist, welches mit einem zweiten Bauteil elektrisch kontaktierbar oder elektrisch verbindbar ist.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: eine schematische Ansicht zweier Bauteile, welche durch mehrere Leiter als Durchführungskontakte gemäß der Erfindung elektrisch miteinander verbunden sind, wobei die beiden Bauteile hierbei durch ein Trennwandelement voneinander getrennt sind;
- Fig. 2: einen Ausschnitt A eines Leiters als Durchführungskontakt und seine Durchführung durch das Trennwandelement gemäß Fig. 1;
- Fig. 3: den Ausschnitt A gemäß Fig. 2, wobei der Leiter als Durchführungskontakt dabei aus gezogenem Aluminium besteht; und
- Fig. 4: ein Ablaufdiagramm zur Herstellung einer erfindungsgemäßen Durchführung des Kontakts durch das Trennwandelement gemäß der Fig. 1, 2 und 3.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist -jeweils mit denselben Bezugszeichen versehen.

### BESCHREIBUNG VON AUSFÜHRUNGSBEISPIELEN

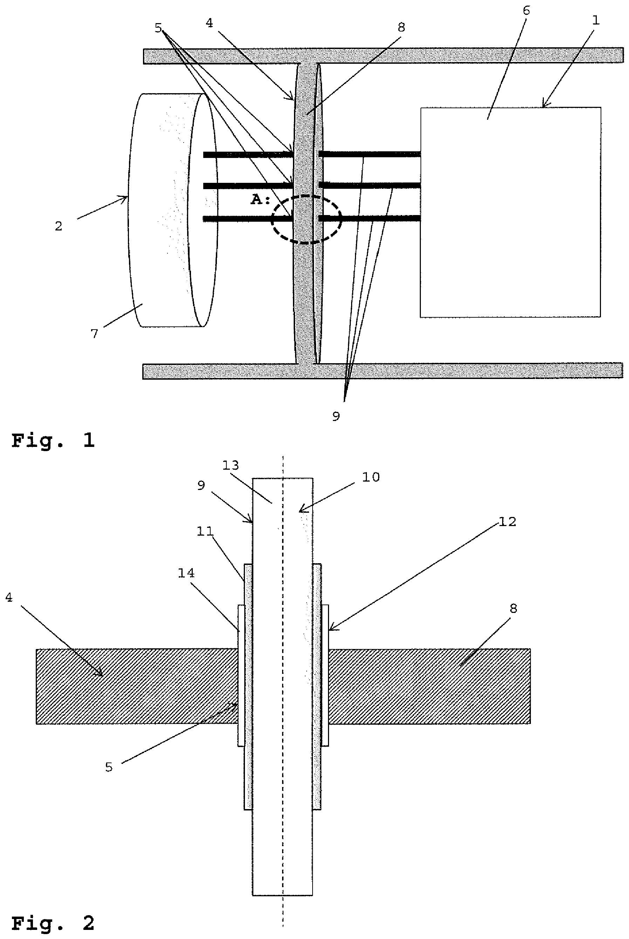

Fig. 1 zeigt eine stark vereinfachte Ansicht zweier Bauteile 1, 2, welche durch mehrere Leiter 9 als Durchführungskontakte elektrisch miteinander verbunden sind, wobei die beiden Bauteile 1, 2 hierbei durch ein Trennwandelement 4 voneinander getrennt sind. Dabei bildet das Trennwandelement 4 zusammen mit dem ersten Bauteil 1 mit dem wenigstens einen Leiter 9 ein erfindungsgemäßes System, bei welchen das erste Bauteil mittels seines wenigstens einen Leiters 9 mit dem zweiten Bauteil 2 auf der anderen Seite des Trennwandelements 4 elektrisch kontaktiert oder verbunden werden kann, wobei der Leiter dabei in einer Durchführung 5 des Trennwandelements 4 dicht, insbesondere flüssigkeitsdicht und vorzugsweise gasdicht, aufgenommen ist, wie im Folgenden noch detaillierter erläutert wird.

Der Leiter 9 kann dabei als Pin vorgesehen sein. Dies gilt für alle Ausführungsformen der Erfindung. Die Kontakte bzw. Durchführungskontakte müssen daher durch das Trennwandelement 4 hindurchgeführt werden, um die beiden Bauteile 1, 2 elektrisch miteinander zu verbinden.

Die Durchführungskontakte werden dabei derart durch das Trennwandelement 4 hindurchgeführt, dass eine elektrisch isolierte und vorzugsweise dichte, insbesondere flüssigkeitsdicht und/oder gasdichte, Durchführung 5 des jeweiligen Durchführungskontakts durch das Trennwandelement 4 bereitgestellt wird.

Eine derartige elektrisch isolierte und dichte Durchführung 5, insbesondere flüssigkeitsdichte und/oder gasdichte Durchführung 5, eines jeweiligen Durchführungskontakts durch das Trennwandelement 4 wird nachfolgend anhand von Fig. 2 noch detaillierter erläutert. Fig. 2 zeigt dabei den in Fig. 1 mit einer gestrichelten Linie angedeuteten Ausschnitt A.

In Fig. 1 ist als Beispiel für die beiden elektrisch zu verbindenden Bauteile 1, 2 eine Elektronikbaugruppe 6 und eine Statorwicklung 7 stark vereinfacht und rein schematisch dargestellt, welche durch eine Gehäusewand 8 als Beispiel für ein Trennwandelement 4 voneinander getrennt sind. Die Gehäusewand kann beispielsweise aus Metall, z.B. Stahl, Aluminium oder einer Aluminiumlegierung bestehen, und/oder aus Kunststoff, faserverstärktem Kunststoff usw.

Die Erfindung ist jedoch weder auf eine Elektronikbaugruppe 6 und eine Statorwicklung 7 als Beispiele für elektrisch durch wenigstens einen Durchführungskontakt 3 miteinander zu verbindende Bauteile 1, 2 beschränkt, noch auf eine Gehäusewand 8 als Beispiel für ein Trennwandelement 4 oder auf mehrere Durchführungskontakte, z.B. in Form von Phasenkontakten. Stattdessen kann jedes Bauteil vorgesehen werden, welches mittels wenigstens einem Kontakt oder Durchführungskontakt mit einem anderen Bauteil elektrisch verbindbar ist, wobei die beiden Bauteile dabei durch ein Trennwandelement voneinander getrennt sind, durch welches der wenigstens eine Kontakt oder Durchführungskontakt hindurchzuführen ist.

In Fig. 2 ist ein rein schematischer und stark vereinfachter Ausschnitt A eines der in Fig. 1 gezeigten Kontakte oder Durchführungskontakte und seiner Durchführung durch das Trennwandelement 4 gemäß Fig. 1 gezeigt. Der Ausschnitt A ist in Fig. 2 in einer Schnittansicht dargestellt.

Dabei wird ein Leiter 9 eines Bauteils 1 als Durchführungskontakt 3 durch eine Durchführung 5 in dem Trennwandelement 4 von einer Seite des Trennwandelements 4 eingeführt und durch die Durchführung 5 hindurchgeführt, um auf der anderen Seite des Trennwandelements 4 elektrisch mit einem anderen Bauteil 2 kontaktiert zu werden. Die beiden Bauteile 1 und 2 sind in Fig. 1 gezeigt. Als Durchführung 5 ist in dem Trennwandelement 4 in dem in Fig. 2 gezeigt Ausführungsbeispiel eine zylindrische Durchführung, z.B. eine Durchgangsbohrung, vorgesehen zum Durchführen eines entsprechenden Leiters 9 mit einem kreisförmigen Querschnitt. Die Erfindung ist weder auf einen Leiter 9 als Durchführungskontakt mit einem konstanten kreisförmigen Querschnitt noch auf eine zylindrische Durchführung 5 beschränkt.

Der durchzuführende Leiter 9 besteht beispielsweise aus gezogenem Aluminium oder aluminisiertem Kupfer. Ein derartiger Leiter 9 als Durchführungskontakt aus aluminisiertem Kupfer ist in dem Ausführungsbeispiel in Fig. 2 gezeigt. Bei einem Leiter 9 aus aluminisiertem Kupfer weist der Leiter 9 als Kupferleiter 10 einen Kern aus Kupfer oder einer Kupferlegierung auf und wird auf seiner Außenseite mit einer zusätzlichen Aluminiumbeschichtung 11 aus Aluminium oder einer Aluminiumlegierung versehen , wie in dem Ausführungsbeispiel in Fig. 2 gezeigt ist. Aluminisiertes Kupfer hat den Vorteil, dass es eine besonders gute Leitfähigkeit besitzt und sich daher dort besonders gut eignet, wo eine hohe Leitfähigkeit gewünscht ist. Durch die Aluminisierung des Kupferleiters kann anschließend eine nachfolgend beschriebene Oxid- oder Eloxalschicht 14 auf den Kupferleiter bzw. dessen Aluminiumbeschichtung 11 aufgebracht werden, wie in Fig. 2 gezeigt ist. Die Oxid- oder Eloxalschicht 14 wirkt dabei elektrisch isolierend. Eine solche Oxid- oder Eloxalschicht oder - schichten 14 kann durch anodisches, elektrisches Oxidieren erzeugt werden und produziert eine auf Aluminium bzw. der Aluminiumbeschichtung 11 haltbare isolierende Schicht oder Schichten. Kupfer selbst kann man nicht eloxieren im Gegensatz zu Aluminium oder der Aluminiumbeschichtung 11. Daher muss Aluminium bzw. die Aluminiumbeschichtung 11 an der Außenseite eines Leiters aus Kupfer vorgesehen werden, da nur Aluminium eloxiert werden kann.

Bei einem Aluminiumleiter aus gezogenem Aluminium oder einer gezogenen Aluminiumlegierung ist dagegen eine zusätzliche Beschichtung aus Aluminium oder eine Aluminiumlegierung, wie bei dem Kupferleiter, nicht vorgesehen.

Die Erfindung ist jedoch weder auf Aluminiumleiter noch auf zusätzlich aluminisierte Kupferleiter beschränkt. Es kann auch jeder andere metallische elektrische Leiter vorgesehen werden, welcher vorzugsweise mit einer Oxid- oder Eloxalbeschichtung versehen werden kann.

Die Aluminisierung oder galvanische Aluminisierung des durch das Trennwandelement 4 durchzuführenden Leiters 9, hier Kupferleiters, kann beispielweise auch nur in einem vorbestimmten Bereich des Leiters 9, beispielsweise einem oxidfrei zu haltenden Bereich des Leiters 9, vorgesehen werden, um beispielsweise eine oxidfreie Kontaktierung des Leiters 9 mit dem anderen Bauteil 2 jenseits der Durchführung 5 oder Durchführungsstelle in dem Trennwandelement 4 sicherzustellen. Die Aluminisierung oder Aluminiumbeschichtung 11 des Leiters 9, hier Kupferleiters, kann dabei nicht nur durch galvanisches Aluminisieren erfolgen sondern auch beispielsweise durch das Verbinden, insbesondere formschlüssige Verbinden, des Leiters 9 mit einer Aluminiumhülse -oder röhrchen. Dazu wird beispielsweise ein Kupferleiter in ein Aluminiumröhrchen eingeführt und z.B. wenigstens das Aluminiumröhrchen gezogen, bis eine formschlüssige Verbindung des Kupferleiters und des Aluminiumröhrchens erhalten wird. Das Aluminiumröhrchen bildet in diesem Fall dann die Aluminiumbeschichtung des Leiters 9, hier z.B. Kupferleiters. Der Leiter ist dabei koaxial in dem Aluminiumröhrchen angeordnet.

Des Weiteren wird der Leiter 9, beispielsweise der aluminisierte Kupferleiter, mit seiner Beschichtung 11 in dem in der Fig. 2 gezeigt Ausführungsbeispiel, mit einer zusätzlichen Beschichtung 14 versehen. Die zusätzliche Beschichtung 14 wird dabei an der Außenseite des Leiters 9 und in dem Ausführungsbeispiel in Fig. 2 an der Außenseite der ersten Beschichtung 11 vorgesehen.

Die zusätzliche Beschichtung 14 befindet sich dabei an dem Leiter 9 in der späteren Zone oder dem Bereich 12 der Durchführung 5 und ist, wie zuvor beschrieben als Oxid- oder Eloxalschicht beispielsweise aus Aluminium oder einer Aluminiumlegierung ausgebildet. Die zusätzliche Beschichtung 14 wird auf den Leiter 9 oder dessen erste Beschichtung 11 beispielsweise aufeloxiert. Eloxieren ist ein allgemein bekanntes Verfahren zur Oberflächenveredelung von Aluminium oder einer Aluminiumlegierung. Es handelt sich dabei um eine Anodisierung, da das Material in einem Bad elektrochemisch oxidiert wird. Die Oxidschicht oder Eloxalschicht als Beschichtung 14 stellt einen guten Isolator dar, der sich durch mechanische Kratzfestigkeit und Beständigkeit auszeichnet. Die Erfindung ist auf eine Oxid- oder Eloxalschicht als Beschichtung 14 jedoch nicht beschränkt. Es kann jede andere geeignete elektrisch isolierende und mechanisch beständige Beschichtung vorgesehen werden.

Die beiden Beschichtungen 11 und 14 sind jedoch optional und können auch weggelassen werden und durch Beschichtungen mit vergleichbaren Eigenschaften ersetzt werden. Dies gilt für alle Ausführungsformen der Erfindung.

Bei der Herstellung der Durchführung 5, insbesondere zylindrischen Durchführung oder Durchgangsbohrung, für den Leiter 9 in dem Trennwandelement 4 wird ein bestimmter Durchmesser der Durchführung 5 eingehalten. Zur Einhaltung des Durchmessers der Durchführung 5 können geeignete Maßnahmen vorgesehen werden. Das zu durchdringende Material erhält dazu im Folgenden eine untermaßliche Bohrung oder Presspassung zur Aufnahme und Durchführung des Leiters 9 als Durchführungskontakt.

Der Leiter 9 als Durchführungskontakt wird vor dem Fügen gegenüber dem Trennwandelement 4 heruntergekühlt. Zum Herunterkühlen kann als geeignetes Mittel z.B. flüssiger Stickstoff eingesetzt werden. Dabei wird der Leiter 9 als Durchführungskontakt derart gekühlt, dass er im Durchmesser schrumpft und seine maßliche Schrumpfung eine Fügung in die untermaßige Durchführung 9, hier untermaßige Durchgangsbohrung, in dem Trennwandelement 4 zulässt. Bei der anschließenden Angleichung der Temperatur des Leiters 9 an die Temperatur des Trennwandelements 4 wird der Leiter 9 als Durchführungskontakt in die Durchgangsbohrung des Trennwandelements 4 eingepresst und kann sich durch die duktilen Eigenschaften seines Leiterkerns 13, z.B. aus Aluminium, einer Aluminiumlegierung oder Kupfer, dem Material des zu durchdringenden Trennwandelements 4, z.B. der Gehäusewand 8 in dem Ausführungsbeispiel in den Fig. 1 und 2, anpassen. Die Oxid- oder Eloxalschicht als zusätzliche Beschichtung 14 ist, solange sie nicht komprimiert wurde, eine harte und isolierende Schicht.

Durch die mittels des Schrumpfvorgangs und anschließenden Dehnungsvorgang des Leiters 9 erzielte Formschlüssigkeit mit dem Trennwandelement 4 bzw. die formschlüssige Verbindung von Leiter 9 und Trennwandelement 4, kann eine ausreichende oder geeignete Flüssigkeitsdichtigkeit und insbesondere Gasdichtigkeit der Durchführung des Leiters 9 durch das Trennwandelement 4 erzielt werden.

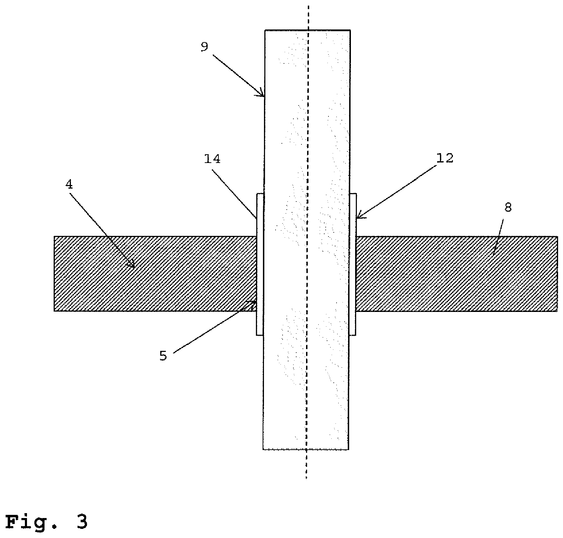

In Fig. 3 ist der Ausschnitt A gemäß Fig. 2 dargestellt, wobei der Leiter als Durchführungskontakt dabei jedoch aus gezogenem Aluminium besteht.

Das in Fig. 3 gezeigte Ausführungsbeispiel weist denselben Aufbau und dieselbe Vorgehensweise wie das in Fig. 2 gezeigte Ausführungsbeispiel auf, so dass hierzu auf die Ausführungen in den Fig. 1 und 2 verwiesen wird, um unnötige Weiderholungen zu vermeiden. Das in Fig. 3 gezeigte Ausführungsbeispiel unterscheidet sich von dem in Fig. 2 gezeigten Ausführungsbeispiel lediglich dadurch, dass der Leiter 9 in Fig. 3 ein Aluminiumleiter aus Aluminium oder einer Aluminiumlegierung ist und nicht zusätzlich aluminisiert ist. Dem entsprechend weist der Leiter 9 an seiner Außenseite zumindest im Bereich der Durchführung 5 durch das Trennwandelement 4 lediglich die Oxid- oder Eloxalschicht als zusätzliche Beschichtung 14 auf im Gegensatz zu dem Ausführungsbeispiel in Fig. 2.

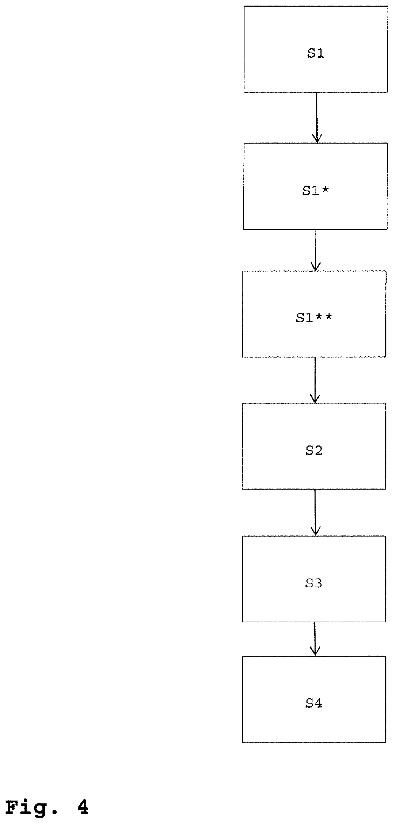

In Fig. 4 ist ein Ausführungsbeispiel für ein Ablaufdiagramm gezeigt zur Herstellung einer erfindungsgemäßen Durchführung eines Leiters als Durchführungskontakt eines ersten Bauteils durch ein Trennwandelement zur elektrischen Verbindung mit einem zweiten Bauteil auf der gegenüberliegende Seite des Trennwandelements, wie zuvor beispielhaft mit Bezug auf die Fig. 1, 2 und 3 gezeigt wurde.

In einem ersten Schritt S1 wird das erste Bauteil mit wenigstens einem Leiter bereitgestellt, wobei der Leiter aus einem elektrisch leitfähigen Material besteht, wie beispielsweise ein Aluminiumleiter, oder zumindest einen Kern aus einem elektrisch leitfähigen Material aufweist, wie einem Kupferleiter, wie er zuvor in Fig. 2 gezeigt ist.

Im Falle eines Kupferleiters wird dieser in einem optionalen Schritt S1* aluminisiert und dabei mit einer zusätzlichen Beschichtung aus Aluminium oder einer Aluminiumlegierung auf seiner Außenseite zumindest im Bereich der Durchführung des Leiters durch das Trennwandelement versehen, um eine anschließende Eloxierung zur elektrischen Isolation zu ermöglichen. Im Falle eines Aluminiumleiters beispielsweise aus einem gezogenen Aluminium oder Aluminiumlegierung kann auf eine zusätzliche Aluminisierung des Leiters mittels dieser Beschichtung verzichtet werden und stattdessen in einem nächsten Schritt S1** gleich eine Oxid- oder Eloxalbeschichtung zumindest im Bereich der Durchführung des Aluminiumleiters durch das Trennwandelement aufgebracht werden.

In dem nächsten Schritt S1** wird der Leiter, hier der Aluminiumleiter oder im Falle des Kupferleiters, dessen aluminisierter Bereich, mit einer zusätzlichen Oxid- oder Eloxalbeschichtung versehen, insbesondere einer Oxid- oder Eloxalbeschichtung aus Aluminium oder einer Aluminiumlegierung. Der Leiter kann dabei beispielsweise ein Aluminiumleiter aus gezogenem Aluminium oder einer Aluminiumlegierung sein, wie zuvor in Fig. 3 gezeigt ist, oder ein aluminisierter Kupferleiter, wie zuvor in Fig. 2 gezeigt ist, oder ein formschlüssig mit einer Aluminiumhülse- oder röhrchen verbundener Kupferleiter.

In einem Schritt S2 wird das Trennwandelement mit einer Durchführung, beispielsweise einer Durchgangsbohrung versehen, wobei die Durchführung dabei untermaßig vorgesehen ist.

Daraufhin wird in einem Schritt S3 der Leiter oder zumindest der durchzuführende Teil des Leiters durch das Trennwandelement und seine Durchführung derart heruntergekühlt, dass der Leiter in seinem Durchmesser geeignet schrumpft, so dass er eine Fügung in die untermaßige Durchführung 5 zulässt.

In einem darauffolgenden Schritt S4 erfolgt eine Angleichung der Temperatur des Leiters an die Temperatur, insbesondere die Betriebstemperatur, des Trennwandelements, wobei der Leiter als Durchführungskontakt in die Durchführung des Trennwandelements eingepresst wird und zusammen mit seiner Oxid- oder Eloxalbeschichtung mit der Durchführung eine dichte, insbesondere flüssigkeitsdichte und vorzugweise eine gasdichte Verbindung bei der Betriebstemperatur oder in einem Betriebstemperaturbereich des Trennwandelements bildet.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. Insbesondere sind die einzelnen Ausführungsbeispiele, wie sie mit Bezug auf die Fig. 1 bis 4 beschrieben wurden auch miteinander kombinierbar, insbesondere einzelne Merkmale hiervon.

### Bezugszeichenliste

- 1: Bauteil
- 2: Bauteil
- 4: Trennwandelement
- 5: Durchführung
- 6: Elektronikbaugruppe
- 7: Statorwicklung
- 8: Gehäusewand
- 9: Leiter
- 10: Kupferleiter
- 11: Beschichtung
- 12: Bereich
- 13: Leiterkern
- 14: Oxid- oder Eloxalschicht

## Patentansprüche

1. System aufweisend ein Trennwandelement (4) und ein erstes Bauteil (1), welches auf einer ersten Seite des Trennwandelements (4) angeordnet ist, wobei das erste Bauteil (1) wenigstens einen Leiter (9) und das Trennwandelement (4) eine zugeordnete Durchführung (5) aufweist zum Einführen und Durchführen des Leiters (9) und elektrisches Kontaktieren des Leiters (9) auf einer der ersten Seite gegenüberliegenden zweiten Seite des Trennwandelements (4), wobei der Leiter (9) mit der Durchführung (5) eine formschlüssige Verbindung bildet und in die Durchführung (5) eingepresst ist, wobei der Leiter (9) zumindest im Bereich der Durchführung (5) des Trennwandelements (4) mit einer Oxid- oder Eloxalschicht (14) versehen ist.

2. System nach Anspruch 1,
**dadurch gekennzeichnet,**
**dass** die Durchführung (5) eine Durchgangsbohrung ist, welche mit dem eingeführten und hindurch geführten Leiter (9) eine Presspassung bildet.

3. System nach Anspruch 1 oder 2,
**dadurch gekennzeichnet,**
**dass** der Leiter (9) zumindest im Bereich der Durchführung (5) des Trennwandelements (4) auf seiner Außenseite aluminisiert ist und dabei vorzugsweise mit einer Beschichtung (11) aus Aluminium oder einer Aluminiumlegierung versehen ist oder formschlüssig mit einer Aluminiumhülse oder einem Aluminiumröhrchen verbunden ist.

4. System nach einem der vorstehenden Ansprüche,
**dadurch gekennzeichnet,**
**dass** die Oxid- oder Eloxalschicht (14) auf der Außenseite des Leiters (9) oder bei einem aluminsierten Leiter (9) auf der aluminisierten Außenseite des Leiters (9), insbesondere einer Beschichtung (11) aus Aluminium oder einer Aluminiumlegierung, einer Aluminiumhülse oder einem Aluminiumröhrchen des aluminisierten Leiters aufgebracht ist.

5. System nach einem der vorstehenden Ansprüche,
**dadurch gekennzeichnet,**
**dass** der Leiter (9) aus einem elektrisch leitenden Material oder elektrisch leitenden Materialkombination und insbesondere aus Kupfer, einer Kupferlegierung, Aluminium und/oder einer Aluminiumlegierung hergestellt ist.

6. System nach einem der vorstehenden Ansprüche,
**dadurch gekennzeichnet,**
**dass** das Trennwandelement (4) aus Metall, einer Metalllegierung, Kunststoff und/oder faserverstärktem Kunststoff hergestellt ist.

7. System nach einem der vorstehenden Ansprüche,,
**dadurch gekennzeichnet,**
**dass** der Leiter (9) dicht, insbesondere flüssigkeitsdicht und/oder gasdicht, in der Durchführung (5) des Trennwandelements (4) aufgenommen ist.

8. System nach einem der vorstehenden Ansprüche,
**dadurch gekennzeichnet,**
**dass** der Leiter (9) auf der zweiten Seite des Trennwandelements (4) mit einem zweiten Bauteil (2) elektrisch kontaktierbar ist, wobei das erste Bauteil (1) eine elektrische Wicklung, insbesondere eine Statorwicklung (7), und das zweite Bauteil (2) eine Elektronikbaugruppe (6) oder umgekehrt sind.

9. Verfahren zur Herstellung eines Systems nach einem der vorstehenden Ansprüche, mit den Schritten:
Bereitstellen des Trennwandelements (4);
Bereitstellen des ersten Bauteils (1) mit dem wenigstens einen Leiter (9);
Aufbringen einer Oxid- oder Eloxalschicht (14) auf zumindest einen Abschnitt des wenigstens einen Leiters (9);
Ausbilden des Trennwandelements (4) mit der Durchführung (5) zur Einführung und Durchführung des zugeordneten wenigstens einen Leiters (9), wobei die Durchführung (5) als Presspassung ausgebildet ist;
Schrumpfen des Durchmessers des Leiters (9) zumindest des durch die Durchführung einzuführenden und durchzuführenden Abschnitts des Leiters (9) durch Herunterkühlen des Leiters (9), bis der Leiter in die Durchführung (5) einführbar und hindurchführbar ist;
Einführen und Durchführen des Leiters (9) von einer ersten Seite in und durch die Durchführung (5) des Trennwandelements (4) zur Bereitstellung einer elektrischen Kontaktierung auf einer der ersten Seite gegenüberliegenden zweiten Seite des Trennwandelements (4).

10. Verfahren nach Anspruch 9,
**gekennzeichnet durch**,
Angleichen der Temperatur des wenigstens einen Leiters (9) an eine Betriebstemperatur des Trennwandelements (4), wobei der wenigstens eine Leiter (9) mit der Durchführung (5) des Trennwandelements (4) eine formschlüssige Verbindung und eine Presspassung bildet.

11. Verfahren nach Anspruch 9 oder 10,
**gekennzeichnet durch**,
Aluminisieren zumindest eines Abschnitts des wenigstens einen Leiters (9), wobei vorzugsweise der in der Durchführung (5) eingeführte und aufgenommene Abschnitt des wenigstens einen Leiters (9) aluminisiert wird.

12. Verfahren nach Anspruch 9 oder 10,
**gekennzeichnet durch**,
Einführen des Leiters (9) in eine Aluminiumhülse oder ein Aluminiumröhrchen und formschlüssiges Verbinden der Aluminiumhülse bzw. des Aluminiumröhrchens mit dem Leiter (9) vorzugsweise durch ein Ziehverfahren.

## Claims

1. System comprising a partition wall element (4) and a first component (1) which is arranged on a first side of the partition wall element (4), the first component (1) having at least one conductor (9) and the partition wall element (4) having an associated passage (5) for inserting and passing through the conductor (9) and electrically contacting the conductor (9) on a second side of the partition wall element (4) opposite the first side, the conductor (9) forming a positive connection with the passage (5) and being pressed into the passage (5), the conductor (9) being provided with an oxide or eloxal layer (14) at least in the region of the passage (5) in the partition wall element (4).

2. System according to claim 1,
**characterised**
**in that** the passage (5) is a through-hole which forms a press fit with the inserted and passed-through conductor (9) .

3. System according to either claim 1 or claim 2,
**characterised**
**in that** the conductor (9) is aluminised on the outer face thereof at least in the region of the passage (5) in the partition wall element (4), and thus preferably provided with a coating (11) of aluminium or an aluminium alloy or positively connected to an aluminium sleeve or an aluminium tube.

4. System according to any of the preceding claims,
**characterised**
**in that** the oxide or eloxal layer (14) is applied to the outer face of the conductor (9), or in the case of an aluminised conductor (9) to the aluminised outer face of the conductor (9), in particular a coating (11) made of aluminium or an aluminium alloy, an aluminium sleeve or an aluminium tube of the aluminised conductor.

5. System according to any of the preceding claims,
**characterised**
**in that** the conductor (9) is made from an electrically conductive material or electrically conductive material combination and in particular from copper, a copper alloy, aluminium and/or an aluminium alloy.

6. System according to any of the preceding claims,
**characterised**
**in that** the partition wall element (4) is made from metal, a metal alloy, plastics material and/or fibre-reinforced plastics material.

7. System according to any of the preceding claims,
**characterised**
**in that** the conductor (9) is received in the passage (5) in the partition wall element (4) in a tight, in particular liquid-tight and/or gas-tight manner.

8. System according to any of the preceding claims,
**characterised**
**in that** the conductor (9) is electrically contactable with a second component (2) on the second side of the partition wall element (4), the first component (1) being an electric winding, in particular a stator winding (7), and the second component (2) being an electronic assembly (6), or vice versa.

9. Method for producing a system according to any of the preceding claims, comprising the steps of:
providing the partition wall element (4);
providing the first component (1) along with the at least one conductor (9);
applying an oxide or eloxal layer (14) to at least a portion of the at least one conductor (9);
forming the partition wall element (4) with the passage (5) for inserting and passing through the associated at least one conductor (9), the passage (5) being formed as a press fit;
shrinking the diameter of the conductor (9), at least of the portion of the conductor (9) to be inserted into and passed through the passage, by cooling down the conductor (9) until the conductor can be inserted into and passed through the passage (5);
inserting and passing the conductor (9) into and through the passage (5) in the partition wall element (4) from a first side to provide electrical contacting on a second side of the partition wall element (4) opposite the first side.

10. Method according to claim 9,
**characterised by**
setting the temperature of the at least one conductor (9) equal to an operating temperature of the partition wall element (4), the at least one conductor (9) forming a positive connection and a press fit with the passage (5) in the partition wall element (4).

11. Method according to either claim 9 or claim 10,
**characterised by**
aluminising at least one portion of the at least one conductor (9), the portion of conductor (9) inserted into and received in the passage (5) preferably being aluminised.

12. Method according to either claim 9 or claim 10,
**characterised by**
inserting the conductor (9) into an aluminium sleeve or an aluminium tube and positively connecting the aluminium sleeve or the aluminium tube to the conductor (9), preferably by a drawing process.

## Revendications

1. Système comportant un élément de paroi de séparation (4) et un premier composant (1), lequel est agencé sur un premier côté de l'élément de paroi de séparation (4), dans lequel le premier composant (1) comporte au moins un conducteur (9) et l'élément de paroi de séparation (4) comporte un passage (5) associé destiné à l'introduction et à l'enfoncement du conducteur (9) et l'établissement d'un contact électrique du conducteur (9) sur un deuxième côté de l'élément de paroi de séparation (4) opposé au premier côté, dans lequel le conducteur (9) forme avec le passage (5) un raccord par complémentarité de formes et est enfoncé dans le passage (5), dans lequel le conducteur (9) est doté d'une couche oxydée ou anodisée (14) au moins dans la zone du passage (5) de l'élément de paroi de séparation (4).

2. Système selon la revendication 1,
**caractérisé en ce**
**que** le passage (5) est une perforation traversante, laquelle forme un ajustement serré avec le conducteur (9) introduit et enfoncé.

3. Système selon la revendication 1 ou 2,
**caractérisé en ce**
**que** le conducteur (9) est aluminisé sur son côté externe au moins dans la zone du passage (5) de l'élément de paroi de séparation (4) et est donc de préférence doté d' un revêtement (11) d'aluminium ou d'un alliage d'aluminium ou est raccordé par complémentarité de forme avec une gaine d'aluminium ou un manchon d'aluminium.

4. Système selon l'une des revendications précédentes,
**caractérisé en ce**
**que** la couche oxydée ou anodisée (14) est montée sur le côté externe du conducteur (9) ou dans le cas d'un conducteur aluminisé (9) sur le côté externe aluminisé du conducteur (9), en particulier sur un revêtement (11) en aluminium ou en un alliage d'aluminium, sur une gaine d'aluminium ou sur un manchon d'aluminium du conducteur aluminisé.

5. Système selon l'une des revendications précédentes,
**caractérisé en ce**
**que** le conducteur (9) est réalisé en un matériau électriquement conducteur ou en une combinaison de matériaux électriquement conductrice et en particulier en cuivre, en un alliage de cuivre, en aluminium et/ou en un alliage d'aluminium.

6. Système selon l'une des revendications précédentes,
**caractérisé en ce**
**que** l'élément de paroi de séparation (4) est réalisé en métal, en un alliage métallique, en plastique et/ou en plastique renforcé par fibres.

7. Système selon l'une des revendications précédentes,
**caractérisé en ce**
**que** le conducteur (9) est logé dans le passage (5) de l'élément de paroi de séparation (4) de manière étanche, en particulier étanche aux liquides et/ou étanche au gaz.

8. Système selon l'une des revendications précédentes,
**caractérisé en ce**
**que** le conducteur (9) peut entrer en contact électrique avec un deuxième composant (2) sur le deuxième côté de l'élément de paroi de séparation (4), dans lequel le premier composant (1) est un enroulement électrique, en particulier un enroulement de stator (7), et le deuxième composant (2) est un module électronique (6) ou inversement.

9. Procédé de fabrication d'un système selon l'une des revendications précédentes, comportant les étapes :
fourniture de l'élément de paroi de séparation (4) ;
fourniture du premier composant (1) doté de l'au moins un conducteur (9) ;
application d'une couche oxydée ou anodisée (14) sur au moins une section de l'au moins un conducteur (9) ;
réalisation de l'élément de paroi de séparation (4) avec le passage (5) d'introduction et d'enfoncement de l'au moins un conducteur associé (9), dans lequel le passage est réalisé comme un ajustement serré ;
contraction du diamètre du conducteur (9) au moins de la section du conducteur (9) à introduire et enfoncer dans le passage par refroidissement du conducteur (9), jusqu'à ce que le conducteur (9) puisse être introduit et enfoncé dans le passage (5) ;
introduction et enfoncement du conducteur (5) depuis un premier côté et dans le passage (5) de l'élément de paroi de séparation (4) pour fournir un contact électrique sur un deuxième côté de l'élément de paroi de séparation (4) opposé au premier côté.

10. Procédé selon la revendication 9,
**caractérisé par**
l'ajustement de la température de l'au moins un conducteur (9) à une température de fonctionnement de l'élément de paroi de séparation (4), dans lequel l'au moins un conducteur (9) forme avec le passage (5) de l'élément de paroi de séparation (4) un raccord par complémentarité de forme et un ajustement serré.

11. Procédé selon la revendication 9 ou 10,
**caractérisé par**
l'aluminisation d'au moins une section de l'au moins un conducteur (9), dans lequel de préférence la section introduite et logée dans le passage (5) de l'au moins un conducteur (9) est aluminisée.

12. Procédé selon la revendication 9 ou 10,
**caractérisé par**
l'introduction du conducteur (9) dans une gaine d'aluminium ou un manchon d'aluminium et le raccord par complémentarité de formes de la gaine d'aluminium ou respectivement du manchon d'aluminium avec le conducteur (9) de préférence par un procédé de tréfilage.
